# EUROPÄISCHE PATENTSCHRIFT

(11) **EP 2 678 456 B1**
(45) Veröffentlichungstag und Bekanntmachung des Hinweises auf die Patenterteilung: **18.03.2015**
(21) Anmeldenummer: 11709865.7
(22) Anmeldetag: 25.02.2011
(51) Int. Cl.: C22B 7/04, C22B 21/00

(54) **VERFAHREN ZUR BEHANDLUNG VON ALUMINIUMSCHLACKEN**
PROCESS FOR TREATING ALUMINIUM SLAGS
PROCÉDÉ DE TRAITEMENT DE SCORIES D'ALUMINIUM

(43) Veröffentlichungstag der Anmeldung: 01.01.2014
(73) Patentinhaber: Aumund Fördertechnik GmbH, 47495 Rheinberg (DE)
(72) Erfinder: MORITZ, Matthias, 52076 Aachen (DE); NIEDZWIEDZ, Christian, 47495 Rheinberg (DE)
(74) Vertreter: Müller, Karl-Ernst
(86) Internationale Anmeldenummer: PCT/EP2011/000926
(87) Internationale Veröffentlichungsnummer: WO 2012/113418

(56) Entgegenhaltungen:
- EP-A1- 0 232 221
- JP-A- 2001 020 020
- US-A- 3 534 910
- US-A- 4 039 173
- US-A- 4 394 978

## Beschreibung

Die Erfindung betrifft ein Verfahren zur Behandlung von bei der Gewinnung von Aluminium anfallenden Aluminiumschlacken in Form von Krätzen oder Aluminiumsalzschlacken, bei welchem die im Schmelzeprozess anfallende Aluminiumschlacke unter Abschluss gegen die Umgebungsatmosphäre auf einen in einem Gehäuse angeordneten Kühlförderer verbracht wird, der zumindest in einem Abschnitt mit einem Inertgas gespült wird, und wobei zusätzlich eine Kühlung der auf den Kühlförderer liegenden Aluminiumschlacke eingerichtet ist.

Derartige Aluminiumschlacken fallen bei der Primärerzeugung von Aluminium als sogenannte Krätzen an, wobei die auf die Oberfläche der Schmelze aufschwimmenden Schlacken von der Aluminiumoberfläche des Bades abgekratzt werden. Diese Krätzen enthalten neben metallischem Aluminium und Aluminiumoxid diverse Verbrennungsprodukte und abgelöste Reste aus der Feuerfestzustellung der Schmelzöfen. Je nach dem in den Krätzen enthaltenen Anteil an Aluminium werden die Krätzen als Skimmings (Aluminiumanteil > 45%) oder als Dross (Aluminiumanteil < 45%) bezeichnet. Soweit die Kratzen zur Rückgewinnung der in ihnen enthaltenen Aluminiumanteile einer weiteren Bearbeitung zugeführt werden, unterliegen die Krätzen nach ihrem Abstreifen von der Badoberfläche aufgrund der einwirkenden Umgebungsatmosphäre einsetzenden Oxidationsprozessen, die zudem zum Freisetzen schädlicher Gase in die Arbeitsatmosphäre an den Schmelzöfen führen.

Aluminiumschlacken fallen weiterhin auch bei der Sekundärerzeugung von Aluminium aus Aluminiumschrott an, und zwar hier in einem noch größeren Umfang. Soweit im Rahmen des für die Sekundärerzeugung eingesetzten Salzbadprozesses Salzgemische aus NaCl und KCl zugegeben werden, kommt es zur Bildung sogenannter Aluminiumsalzschlacken; die ebenfalls noch rückgewinnbare Anteile an Aluminium enthalten. Insbesondere auch diese Aluminiumsalzschlacken neigen beim Abgießen der verflüssigten Rohschmelze zu einer unmittelbaren Reaktion mit der Umgebungsatmosphäre, wodurch einerseits die Rückgewinnung des Aluminiumanteils aus den Aluminiumsalzschlacken erschwert wird und andererseits schädliche Gase in die Arbeitsumgebung der Schmelzöfen freigesetzt werden.

Hierzu ist in der EP 0 232 221 A1 bereits ein Verfahren mit den eingangs genannten, gattungsgemäßen Merkmalen vorgeschlagen, bei dem die im Schmelzeprozess anfallende Aluminiumschlacke unter einer Schutzgasatmosphäre abgekühlt wird. Im Einzelnen wird die Aluminiumschlacke von dem Schmelzemodul über einen luftdicht zugedeckten Schmelzekanal bis zu einem Schmelzeabfluss gefördert. Der Schmelzekanal ist aus zwei koaxial angeordneten Röhren aufgebaut. Dabei dient eine innere Röhre der Aufnahme und dem Transport der mittels Vibration fluidisierten Aluminiumschlacke, wobei diese innere Röhre über ihre gesamte Länge mit einer Schutzgasatmosphäre versehen ist. Die innere Röhre ist wiederum auf ihrer gesamten Länge von einer äußeren Röhre umschlossen, in der Kühlvorrichtungen zur Kühlung der inneren Röhre angeordnet sind. Insoweit wird die durch die innere Röhre geförderte Aluminiumschlacke auf eine Temperatur von unter 200° Celsius abgekühlt.

Mit dem bekannten Verfahren ist der Nachteil verbunden, dass die Kühlung der Aluminiumschlacke nur mittelbar über die Kühlung der inneren Röhre möglich ist, weil der Zutritt von Kühlluft zur Aluminiumschlacke über die gesamte Kühlstrecke zu vermeiden ist. Damit ist der Schutzgasbedarf im Inneren der inneren Röhre sehr hoch, weil die Schutzgasatmosphäre ebenfalls über die gesamte benötigte Kühlstrecke aufrechterhalten werden muss. Gleiches gilt auch für den Bedarf an Kühlmittel.

Ähnliche Konzepte sind auch in der JP 2001 020020 A wie auch der US 4 394 978 A beschrieben, im Rahmen derer die Aluminiumschlacken durch beispielsweise wassergekühlte Trommeln gefördert und somit abgekühlt werden. Im Inneren der Trommeln ist jeweils eine Schutzgasatmosphäre eingerichtet, damit die Aluminiumschlacken nicht mit der sauerstoffhaltigen Atmosphäre in Berührung kommen.

Insoweit liegt der Erfindung die Aufgabe zugrunde, bei einem Verfahren der eingangs genannten Art den Aufwand für die Kühlung der Aluminiumschlacke zu verringern und insbesondere den Bedarf an Schutzgas abzusenken.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im Einzelnen vor, dass der Kühlförderer einen ersten, an die Aufgabe der Aluminiumschlacke anschließenden Abschnitt und einen daran anschließenden, von dem ersten Abschnitt durch eine Dichtklappe getrennten zweiten Abschnitt aufweist, wobei die Längen von erstem Abschnitt und zweitem Abschnitt des Kühlförderers derart ausgelegt sind, dass im ersten, mit Inertgas gespülten Abschnitt eine Abkühlung der Aluminiumschlacke auf eine Temperatur von 600° Celsius bis zu 300° Celsius erfolgt, bei welcher die Aluminiumschlacke durch Zutritt von Luftsauerstoff chemisch nicht mehr veränderbar ist, und im zweiten Abschnitt unter Einwirkung von zugeführter Kühlluft eine Abkühlung auf eine Temperatur erfolgt, bei welcher die abgekühlte

Aluminiumschlacke nach Verlassen des Kühlförderers zur Rückgewinnung des Aluminiumanteils in der Aluminiumschlacke weiter verarbeitbar ist, und wobei dem ersten Abschnitt und dem zweiten Abschnitt jeweils eine Absauganlage für das Inertgas einerseits und die erwärmte Kühlluft andererseits zugeordnet ist.

Somit beruht die Erfindung auf dem Prinzip, dass die Kühlung der Aluminiumschlacken auf dem Kühlförderer auf einem ersten Abschnitt des Kühlförderers unter Zusatz von Inertgas erfolgt, da auf diese Weise weiterhin der Zutritt von Luftsauerstoff und damit eine Oxidation der Aluminiumschlacke verhindert ist, während auf dem zweiten Abschnitt eine unmittelbare Kühlung der Aluminiumschlacke mittels Kühlluft erfolgt.

Mit der Erfindung ist insbesondere der Vorteil verbunden, dass aufgrund der Aufteilung des Kühlförderers in zwei Abschnitte der Gesamtbedarf an Schutzgas verringert ist. Erst wenn bei entsprechend ausgelegter Länge des ersten Kühlabschnitts die Aluminiumschlacke eine Temperatur erreicht hat, bei welcher die Aluminiumschlacke durch Zutritt von Luftsauerstoff chemisch nicht mehr veränderbar ist, so dass eine weitere Reaktion der Aluminiumschlacke beziehungsweise des in ihr enthaltenen Aluminiumanteils mit dem Luftsauerstoff nicht mehr erfolgt, geschieht die weitere Abkühlung der Aluminiumschlacke bis auf eine für die Weiterverarbeitung geeignete Temperatur in dem zweiten Abschnitt des Kühlförderers über einen an sich bekannten Kühlprozess mittels Konvektionskühlung, bei welcher über die Absaugung aus der Einhausung des Kühlförderers entsprechend Kühlluft nachgezogen und noch freigesetzte Gase, insbesondere HF-Gase, abgezogen werden. Es versteht sich, dass der Kühlförderer in einem Gehäuse angeordnet ist, welches eine geregelte Zufuhr wie auch eine Absaugung sowohl des Inertgases wie auch der Kühlluft ermöglicht.

Da die erfindungsgemäße Vorgehensweise sowohl für die bei der Primärerzeugung von Aluminium anfallenden Krätzen als auch für die bei der Sekundärerzeugung anfallenden Aluminiumsalzschlacken anwendbar ist, liegen in den zu behandelnden Schlacken jeweils unterschiedliche Anteile von Aluminium vor, die die Reaktivität der zu behandelnden Schlacken mit Luftsauerstoff im Hinblick auf die Einstellung unterschiedlicher Endtemperaturen für die Auslegung des ersten Abschnitts des Kühlförderers beeinflussen. Insofern ist die Auslegung der Länge des ersten, mit dem Inertgas beaufschlagten Abschnitts des Kühlförderers abhängig von der jeweiligen Prozessführung bei der Aluminiumerzeugung, ob also Aluminiumschlacken beziehungsweise Aluminiumsalzschlacken mit einem höheren oder niedrigeren Gehalt an Aluminium zu behandeln sind.

Insgesamt erfolgt eine Abkühlung der Aluminiumschlacke im ersten Abschnitt des Kühlförderers auf eine Temperatur von 600° Celsius bis zu 300° Celsius, wobei sich die Festlegung der Endtemperatur des ersten Kühlabschnitts im Einzelnen je nach dem Anteil des in der zu behandelnden Schlacke enthaltenen Aluminiums richtet. Üblicherweise liegt diese Temperatur im Rahmen der zuvor genannten Temperaturangaben.

Die zur Weiterverarbeitung der Aluminiumschlacke geeignete Temperatur liegt nach einem Ausführungsbeispiel der Erfindung bei < 150° Celsius.

Hinsichtlich der Verbringung der Aluminiumschlacke auf den Kühlförderer sieht ein zweckmäßiges Ausführungsbeispiel der Erfindung vor, dass die im Schmelzeprozess anfallende Aluminiumschlacke in einem mittels eines Deckels gegen die Umgebungsatmosphäre abschließbaren Behälter gesammelt und der nach seiner Befüllung mit der Aluminiumschlacke geschlossene Behälter innerhalb einer gegen die Umgebungsatmosphäre abgeschlossenen Einhausung auf den Kühlförderer entleert wird. Hiermit ist der Vorteil einer quasi-kontinuierlichen Behandlung der anfallenden Aluminiumschlacke verbunden, soweit diese Aluminiumschlacke in einen Behälter verbracht und der Behälter dann diskontinuierlich auf den Kühlförderer entleert wird. Je nach der Menge der anfallenden Schlacken ist ein Behälterkreislauf in einem gewissen Umfang einzurichten.

Bei einer alternativen Ausführungsform der Erfindung ist vorgesehen, dass wiederum die im Schmelzeprozess anfallende Aluminiumschlacke in einem mittels eines Deckels gegen die Umgebungsatomsphäre abschließbaren Behälter gesammelt wird. Zur Übergabe des Behälterinhalts auf den Kühlförderer ist an dem Gehäuse des Kühlförderers eine Übergabestation ausgebildet, die gegen die Umgebungsatmosphäre abgeschlossen und nur bei auf die Übergabestation aufgesetztem Behälter öffenbar ist.

Nach einem Ausführungsbeispiel werden alsdann bei auf die Übergabestation aufgesetztem Behälter ein im Boden des Behälters angeordnetes Öffnungsorgan und ein im Aufsatzbereich für den Behälter an der Übergabestation angeordnetes Öffnungsorgan geöffnet und nach Entleerung des Behälters auf den Kühlförderer wieder geschlossen, wobei vorgesehen sein kann, dass die jeweiligen Öffnungsorgane an Übergabestation und Behälter als Flachschieber ausgebildet sind.

Mit dem vorstehend genannten Ausführungsbeispiel ist der Vorteil verbunden, dass ein kompletter Abschluss des Kühlförderers gegen die Umgebungsatmosphäre gegeben ist, wobei im Vergleich mit der alternativ vorgeschlagenen Einhausung eine Reduzierung des auf dem ersten Abschnitt des Kühlförderers einzusetzenden Inertgases verbunden ist. Die dosierte Aufgabe des Behälterinhalts auf den Kühlförderer führt zu einer konstanten Schichthöhe wie auch einer Beschickung des Kühlförderers über dessen gesamten Breite, so dass der Kühlprozess dadurch verbessert ist. Aufgrund der an Übergabestation und Behälter eingerichteten Doppelschleuse sind nur geringe Verluste an dem eingesetzten Inertgas zu erwarten, und es erfolgt auch keine Freisetzung von HF-Abgasen.

Auch andere Möglichkeiten sind denkbar; beispielsweise kann der Kühlförderer auch unmittelbar an den Schmelzofen herangeführt sein, so dass eine Übergabe der abgekratzten Schlacke auf den Kühlförderer erfolgt. Alternativ kann auch ein kurzer Übergabeförderer vorgesehen sein.

Nach einem Ausführungsbeispiel der Erfindung ist vorgesehen, dass als Inertgas zur Kühlung der Aluminiumschlacke auf dem ersten Abschnitt des Kühlförderers Argon eingesetzt wird.

Es kann weiterhin vorgesehen sein, dass das aus dem ersten Abschnitt des Kühlförderers abgesaugte Inertgas über eine Wiederaufbereitung geführt und das rückgewonnene Inertgas erneut dem Kühlförderer aufgegeben wird, wobei ebenfalls vorgesehen sein kann, dass die Wiederaufbereitung des Inertgases eine Wärmerückgewinnungsstufe und eine Gaswäsche umfasst.

Hinsichtlich der im zweiten Abschnitt des Kühlförderers nachgezogenen Kühlluft ist nach einem Ausführungsbeispiel der Erfindung vorgesehen, dass die aus dem zweiten Abschnitt des Kühlförderers abgesaugte Kühlluft über eine Luftreinigungsanlage geführt wird, wobei ebenfalls aus Gründen der Energieeffizienz einer solchen Anlage vorgesehen sein kann, dass die Kühlluft über eine Wärmerückgewinnungsstufe geführt wird.

In der Zeichnung sind Ausführungsbeispiele der Erfindung wiedergegeben, welche nachstehend beschrieben sind. Es zeigen:
- Fig. 1: einen schematischen Verfahrensablauf anhand der Darstellung von entsprechend angeordneten Aggregaten zur Durchführung des Verfahrens,
- Fig. 2: einen Kühlförderer mit Einhausung und Übergabestation zur Entleerung eines mit Aluminiumschlacke gefüllten Behälters.

Soweit in einem Schmelzofen 10 durch Einschmelzen von Aluminiumschrott unter Zugabe entsprechender Salzgemische eine Schmelze 40 von reinem Aluminium mit einer darauf aufschwimmenden Aluminiumschlacke 41 in Form einer sogenannten Aluminiumsalzschlacke erzeugt ist, wird die Aluminiumschlacke 41 mittels eines Kratzers 11 vor oder während des Abgusses der Aluminiumschmelze 40 aus dem Schmelzofen 10 abgehalten und unmittelbar in einen Behälter 12 verbracht, der mittels eines Deckels 13 in einer gegen den Zutritt von Luftsauerstoff geeigneten Weise abdichtbar ist.

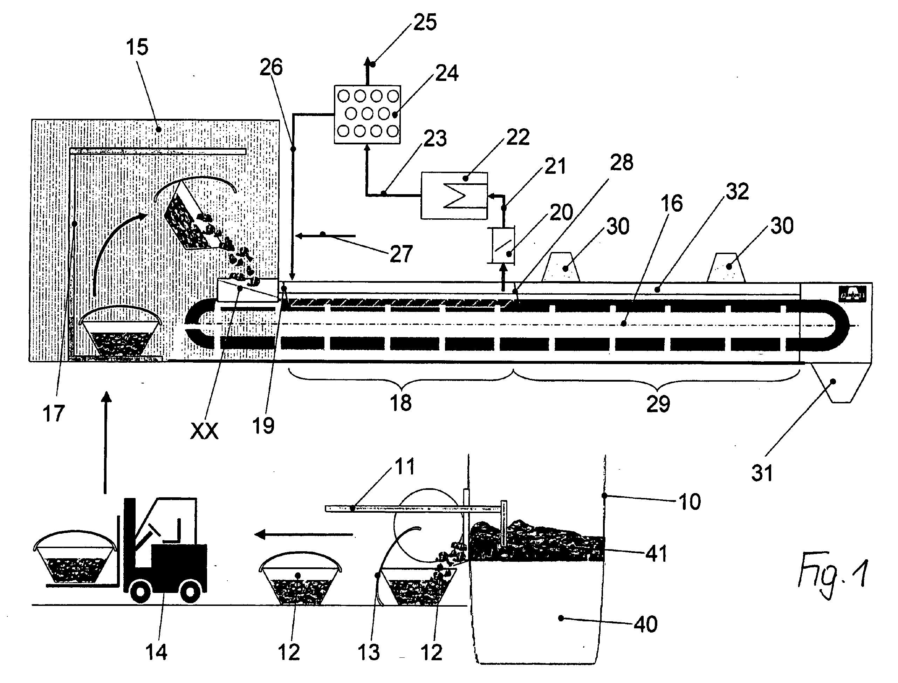

Bei dem in Figur 1 beschriebenen Ausführungsbeispiel wird der mittels des Deckels 13 verschlossene Behälter 12 von einem Gabelstapler 14 aufgenommen und in eine Einhausung 15 gefahren, die ebenfalls gegen den Zutritt der Umgebungsatmosphäre abgedichtet ist. Es versteht sich, dass für das Einfahren des Gabelstaplers 14 in die Einhausung 15 entsprechende Schleusen vorzuhalten sind. Im Inneren der Einhausung 15 befindet sich die Aufgabestation 17 eines an die Einhausung 15 anschließenden Kühlförderers 16 derart, dass der Behälter 12 unter Öffnung seines Deckels 13 innerhalb der Einhausung 15 in die Aufgabestation 17 entleerbar ist. Der Austritt des Kühlförderers 16 aus der Einhausung 15 ist durch eine entsprechende, auf dem Fördergut aufliegende Dichtklappe 19 verwirklicht.

Der Kühlförderer 16 ist in einer an sich bekannten Weise innerhalb eines Gehäuses 32 angeordnet, welches es ermöglicht, ein entsprechendes Kühlmedium in das Innere des Gehäuses 32 einzuleiten und darüber das auf dem Kühlförderer 16 liegende Fördergut zu kühlen, wobei das Kühlmedium aus dem Gehäuse 32 abgesaugt wird. Die Ausbildung derartiger Kühlförderer ist im Grundsatz im Stand der Technik bekannt, beispielsweise aus der WO 2004/074521 A2.

Im vorliegenden Fall ist der Kühlförderer 16 in zwei Abschnitte unterteilt, und zwar in einen ersten Abschnitt 18 und in einen daran anschließenden Abschnitt 29. In dem ersten Abschnitt 18 wird über eine Leitung 26 Argon als Inertgas in das Gehäuse 32 des Kühlförderers 16 eingebracht, so dass über die Einleitung des Argon eine Kühlung der auf dem Förderer liegenden Aluminiumschlacke 41 erfolgt. Am Ende des ersten Abschnitts 18 ist eine Absaugstation 20 für das zugeführte Argon angeordnet, von der das abgesaugte Argon über eine Leitung 21 zunächst einer Wärmerückgewinnungsanlage 22 zugeführt wird. Nach entsprechendem Wärmeentzug wird das Argon über eine Leitung 23 zu einer Gaswäsche 24 geführt, aus welcher das wiederaufbereitete Argon über die Leitung 26 wiederum dem Kühlförderer 16 zugeführt wird; von der Gaswäsche 24 tritt Abgas 25 aus.

An den ersten Abschnitt 18 des Kühlförderers 16 schließt ein von diesem ersten Abschnitt mittels einer Dichtklappe 28 getrennter zweiter Abschnitt 29 des Kühlförderers an, in welchem nun Kühlluft in das Gehäuse 32 eingeleitet wird, wobei die erwärmte Kühlluft über zugeordnete Absaugungen 30 aus dem Gehäuse 32 abgesaugt wird. Es entspricht dem Stand der Technik, diese Kühlluft einer entsprechenden Luftreinigung zu unterziehen und gegebenenfalls auch über eine Wärmerückgewinnungsanlage zu führen. Das am Ende der Förderstrecke des Kühlförderers 16 noch auf dem Kühlförderer 16 liegende Material wird über einen Abwurftrichter 31 nach außerhalb des Gehäuses 32 verbracht, von wo aus es der Wiederaufbereitung zugeführt wird.

Das Verhältnis von erstem Abschnitt 18 zu zweitem Abschnitt 29 des Kühlförderers 16 ist so ausgelegt, dass die auf dem Kühlförderer 16 liegende Aluminiumschlacke 41 bei Eintritt in den zweiten Abschnitt 29 keine Temperatur oberhalb von beispielsweise 400° Celsius mehr aufweist, so dass eine Reaktion der Aluminiumschlacke 41 mit Luftsauerstoff nicht mehr eintritt. Die Länge des zweiten Abschnitts 29 des Kühlförderers 16 ist dabei so bemessen, dass die Temperatur des in den Abwurftrichter 31 gelangenden Materials nicht mehr als 150° Celsius, vorzugsweise etwa 100° Celsius beträgt.

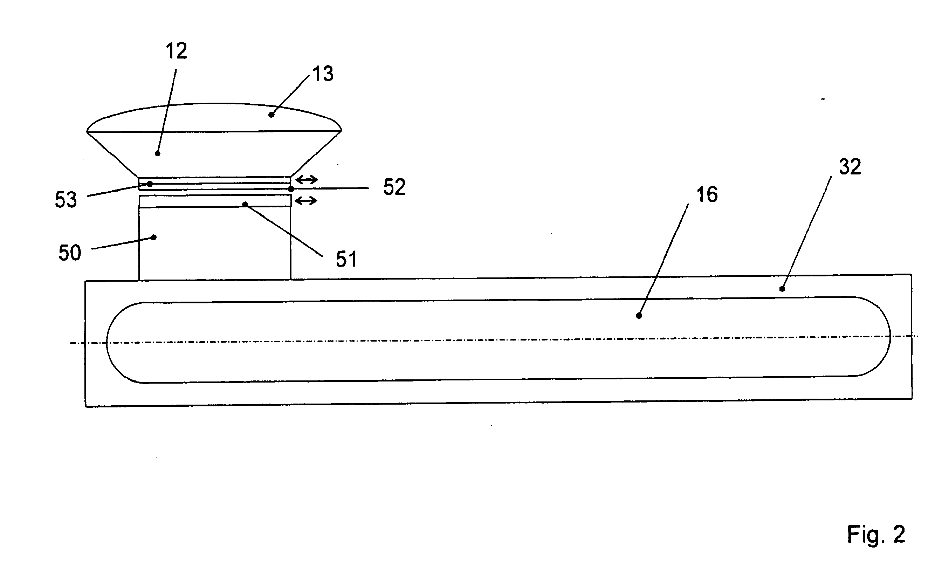

Das in Figur 2 dargestellte Ausführungsbeispiel unterscheidet sich von dem zuvor beschriebenen Ausführungsbeispiel lediglich in der Entleerung des mit Aluminiumschlacke 41 gefüllten Behälters 12 auf den Kühlförderer 16, alternativ zu der Einrichtung der Einhausung 15 bei dem vorstehend zu Figur 1 beschriebenen Ausführungsbeispiel. Zur Einrichtung der Übergabe ist das Gehäuse 32 des Kühlförderers 16 in seinem Aufgabebereich mit einer Übergabestation 50 versehen, auf die ein weiterhin von einem Gabelstapler 14 beförderter Behälter 12 aufsetzbar ist. Der Behälter 12 ist mittels des Deckels 13 gegen die Umgebungsatmosphäre abgeschlossen und weist in seinem Boden 52 ein Öffnungsorgan in Form eines verschiebbaren Flachschiebers 53 auf. Die stutzenartig ausgebildete Übergabestation ist in ihrem Aufsatzbereich auf die Abmessungen des darauf aufzusetzenden Behälters 13 abgestimmt und weist an ihrem oberen Ende ebenfalls einen Flachschieber 51 als Öffnungsorgan auf.

Ist der Behälter 12 auf die Übergabestation 50 des Gehäuses 32 des Kühlförderers 16 aufgesetzt, so wird zunächst der an der Übergabestation 50 eingerichtete Flachschieber 51 geöffnet, um den Zugang zum Kühlförderer 16 freizugeben. Anschließend wird der im Boden 52 des Behälters 12 angeordnete Flachschieber 53 gesteuert derart geöffnet, dass sich die aus dem Behälter 12 austretende Aluminiumschlacke mit einer möglichst gleichmäßigen Schichthöhe über die gesamte Breite des Kühlförderers 16 verteilt. Nach Entleerung des Behälters 12 wird zunächst der daran ausgebildete Flachschieber 53 geschlossen, anschließend der Flachschieber 51 der Übergabestation 50, so dass die Abdichtung insbesondere des Gehäuses 32 des Kühlförderers 16 wieder hergestellt ist. Anschließend kann der leere Behälter 12 aufgenommen und in den Behälterkreislauf zurückgeführt werden.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Verfahren zur Behandlung von bei der Gewinnung von Aluminium anfallenden Aluminiumschlacken (41) in Form von Krätzen oder Aluminiumsalzschlacken, bei welchem die im Schmelzeprozess anfallende Aluminiumschlacke (41) unter Abschluss gegen die Umgebungsatmosphäre auf einen in einem Gehäuse (32) angeordneten Kühlförderer (16) verbracht wird, der zumindest in einem Abschnitt (18) mit einem Inertgas gespült wird, und wobei zusätzlich eine Kühlung der auf dem Kühlförderer (16) liegenden Aluminiumschlacke (41) eingerichtet ist, **dadurch gekennzeichnet, dass** der Kühlförderer (16) einen ersten, an die Aufgabe der Aluminiumschlacke (41) anschließenden Abschnitt (18) und einen daran anschließenden, von dem ersten Abschnitt (18) durch eine Dichtklappe (28) getrennten zweiten Abschnitt (29) aufweist, wobei die Längen von erstem Abschnitt (18) und zweitem Abschnitt (29) des Kühlförderers (16) derart ausgelegt sind, dass im ersten, mit Inertgas gespülten Abschnitt (18) eine Abkühlung der Aluminiumschlacke (41) auf eine Temperatur von 600° Celsius bis zu 300° Celsius erfolgt, bei welcher die Aluminiumschlacke (41) durch Zutritt von Luftsauerstoff chemisch nicht mehr veränderbar ist, und im zweiten Abschnitt (29) unter Einwirkung von zugeführter Kühlluft eine Abkühlung auf eine Temperatur erfolgt, bei welcher die abgekühlte Aluminiumschlacke (41) nach Verlassen des Kühlförderers (16) zur Rückgewinnung des Aluminiumanteils in der Aluminiumschlacke weiter verarbeitbar ist, und wobei dem ersten Abschnitt (18) und dem zweiten Abschnitt (29) jeweils eine Absauganlage (20, 30) für das Inertgas einerseits und die erwärmte Kühlluft andererseits zugeordnet ist.

2. Verfahren nach Anspruch 1, bei welchem auf dem zweiten Abschnitt (29) des Kühlförderer (16) eine Abkühlung der Aluminiumschlacke (41) auf eine Temperatur von weniger als 150° Celsius erfolgt.

3. Verfahren nach einem der Ansprüche 1 oder 2, bei welchem das aus dem ersten Abschnitt (18) des Kühlförderers (16) abgesaugte Inertgas über eine Wiederaufbereitung (22, 24) geführt und das rückgewonnene Inertgas erneut zum Kühlförderers (16) aufgegeben wird.

4. Verfahren nach Anspruch 3, bei welchem die Wiederaufbereitung des Inertgases eine Wärmerückgewinnungsstufe (22) und eine Gaswäsche (24) umfasst.

5. Verfahren nach einem der Ansprüche 1 bis 4, bei welchem die aus dem zweiten Abschnitt (29) des Kühlförderers (16) abgesaugte Kühlluft über eine Luftreinigungsanlage geführt wird.

6. Verfahren nach Anspruch 5, bei welchem die Kühlluft über eine Wärmerückgewinnungsstufe geführt wird.

7. Verfahren nach einem der Ansprüche 1 bis 6, bei welchem die im Schmelzeprozess anfallende Aluminiumschlacke (41) in einem mittels eines Deckels (13) gegen die Umgebungsatmosphäre abschließbaren Behälter (12) gesammelt und der nach seiner Befüllung mit der Aluminiumschlacke geschlossene Behälter (12) innerhalb einer gegen die Umgebungsatmosphäre abgeschlossenen Einhausung (15) auf den Kühlförderer (16) entleert wird.

8. Verfahren nach einem der Ansprüche 1 bis 6, bei welchem die im Schmelzeprozess anfallende Aluminiumschlacke (41) in einem mittels eines Deckels (13) gegen die Umgebungsatmosphäre abschließbaren Behälter (12) gesammelt und der nach seiner Befüllung mit der Aluminiumschlacke geschlossene Behälter (12) auf eine an dem Gehäuse (32) des Kühlförderers (16) ausgebildete Übergabestation (50) aufgesetzt wird, die gegen die Umgebungsatomsphäre abgeschlossen und nur bei darauf aufgesetztem Behälter (12) öffenbar ist.

9. Verfahren nach Anspruch 8, bei welchem bei auf die Übergabestation (50) aufgesetztem Behälter (12) ein im Boden (52) des Behälters (12) angeordnetes Öffnungsorgan (53) und ein im Aufsatzbereich für den Behälter (12) an der Übergabestation (50) angeordnetes Öffnungsorgan (51) geöffnet und nach Entleerung des Behälters (12) auf den Kühlförderer (16) wieder geschlossen werden.

10. Verfahren nach Anspruch 7, bei welchem die Öffnungsorgane (51, 53) an Übergabestation (50) und Behälter (12) jeweils als Flachschieber ausgebildet sind.

11. Verfahren nach einem der Ansprüche 1 bis 8, bei welchem als Inertgas zur Kühlung der Aluminiumschlacke (41) auf dem ersten Abschnitt (18) des Kühlförderers (16) Argon eingesetzt wird.

## Claims

1. Method for treating aluminum slag (41) in the form of dross or aluminum salt slags obtained in the extraction of aluminum, in which the aluminum slag (41) obtained in the melting process is brought with exclusion of the surrounding atmosphere onto a cooling conveyor (16) which is arranged in a housing (32), which cooling conveyor is flushed with an inert gas in a first section (18), wherein a cooling for the aluminum slag (41) lying on the cooling conveyor (16) is provided, **characterized in that** the cooling conveyor (16) comprises a first section (18) connected to the infeed of the aluminum slag (14) and a second section (29) connected to the first section (18) and separated from the first section (18) by a sealing flap (28), wherein the length of the first section (18) and the second section (29) of the cooling conveyor (16) are designed so that in the first section (18) flushed with inert gas the aluminum slag (41) is cooled to a temperature from 600° Celsius to 300° Celsius, at which the aluminum slag (41) can no longer be chemically changed by exposure to atmospheric oxygen, and in the second section (29) the slag (14) is cooled by providing cooling air to a temperature, at which the cooled aluminum slag (41) can be processed further to recover the aluminum in the aluminum slag (41) after leaving the cooling conveyor (16), and wherein an extraction facility (20, 30) is assigned to each of the first section (18) and the second section (29) for the inert gas from the first section (18) and for the warmed cooling air from the second section (29).

2. Method according to claim 1, in which on the second section (29) of the cooling conveyor (16), a cooling of the aluminum slag (41) takes place at a temperature of less than 150° Celsius.

3. Method according to claim 1 or 2, in which the inert gas suctioned from the first section (18) of the cooling conveyor (16) is fed through a reprocessing device (22, 24) and the recovered inert gas is provided again to the cooling conveyor (16).

4. Method according to claim 3, in which the reprocessing of the inert gas includes a heat recovery stage (22) and a gas scrubbing (24).

5. Method according to one of claims 1 through 4, in which the cooling air suctioned from the second section (29) of the cooling conveyor (16) is fed through an air purification assembly.

6. Method according to claim 5, in which the cooling air is fed through a heat recovery stage.

7. Method according to one of claims 1 through 6, in which the aluminum slag (41) obtained in the melting process is collected in a container (12) that can be closed off by a cover (13) from the surrounding atmosphere and the closed container (12) after it is filled with the aluminum slag (41) is emptied within the housing (15) closed off from the surrounding atmosphere on the cooling conveyor (16).

8. Method according to one of claims 1 through 6, in which the aluminum slag (41) obtained in the melting process is collected in a container (12) that can be closed off from the surrounding environment via a cover (13) and the closed container (12) after it is filled with the aluminum slag (41) is placed on a transfer station (50) formed on the housing (32) of the cooling conveyor (16), which can be closed off from the surrounding atmosphere and can be opened only when the container (12) is placed thereon.

9. Method according to claim 8, in which, with the container (12) placed on the transfer station (50), an opening device (53) arranged in the floor (52) of the container (12) and an opening device (53) arranged in an attachment region for the container (12) on the transfer station (50) are opened and after emptying of the container (12) on the cooling conveyor (16) are closed again.

10. Method according to claim 8, in which the opening devices (51, 53) are formed on the transfer station (50) and the container (12) respectively as valve plates.

11. Method according to one of claims 1 through 8, in which argon is used as the inert gas for cooling the aluminum slag (41) on the first section (18) of the cooling conveyor (16).

## Revendications

1. Procédé de traitement de scories d'aluminium (41) qui sont produites lors de l'obtention d'aluminium sous la forme de crasses ou de scories d'aluminium, dans lequel les scories d'aluminium (41) produites dans le processus de fusion sont acheminées en dehors de l'atmosphère environnante à un convoyeur de refroidissement (16) disposé dans un boîtier (32) qui est balayé au moins dans une partie (18) par un gaz inerte et dans lequel en outre un refroidissement des scories d'aluminium (41) se trouvant sur le convoyeur de refroidissement (16) est mis en oeuvre, **caractérisé en ce que** le convoyeur de refroidissement (16) présente une première partie (18) consécutive au dépôt des scories d'aluminium (41) et une deuxième partie (29) consécutive, séparée de la première partie (18) par des volets d'étanchéité (28), dans lequel les longueurs de la première partie (18) et de la deuxième partie (29) du convoyeur de refroidissement (16) sont conçues de telle sorte que dans la première partie (18) balayée par un gaz inerte, un refroidissement des scories d'aluminium (41) s'effectue à une température de 600° Celsius à 300° Celsius, dans lequel les scories d'aluminium (41) ne peuvent plus être modifiées chimiquement par l'entrée d'oxygène de l'air, et dans la deuxième partie (29) sous l'effet de l'air froid acheminé, un refroidissement s'effectue à une température à laquelle les scories d'aluminium refroidies (41) peuvent être traitées à nouveau après avoir quitté le convoyeur de refroidissement (16) pour la récupération de la proportion d'aluminium dans les scories d'aluminium et dans lequel est affecté respectivement à la première partie (18) et à la deuxième partie (29), un dispositif d'aspiration (20, 30) pour le gaz inerte d'une part et l'air froid réchauffé d'autre part.

2. Procédé selon la revendication 1, dans lequel sur la deuxième partie (29) du convoyeur de refroidissement (16), un refroidissement des scories d'aluminium (41) s'effectue à une température inférieure à 150° Celsius.

3. Procédé selon l'une des revendications 1 ou 2, dans lequel le gaz inerte aspiré de la première partie (18) du convoyeur de refroidissement (16) est acheminé par le biais d'un retraitement (22, 24) et le gaz inerte récupéré est à nouveau délivré au convoyeur de refroidissement (16).

4. Procédé selon la revendication 3, dans lequel le retraitement du gaz inerte comprend une étape de récupération de chaleur (22) et un lavage du gaz (24).

5. Procédé selon l'une des revendications 1 à 4, dans lequel l'air froid aspiré de la deuxième partie (29) du convoyeur de refroidissement (16) est acheminé par un dispositif d'épuration d'air.

6. Procédé selon la revendication 5, dans lequel l'air froid est acheminé par une étape de récupération de chaleur.

7. Procédé selon l'une des revendications 1 à 6, dans lequel les scories d'aluminium (41) produites dans le processus de fusion sont rassemblées dans un récipient (12) pouvant être fermé au moyen d'un couvercle (13) à l'atmosphère environnante et le récipient (12) fermé après son remplissage avec les scories d'aluminium est vidé dans un confinement (15) séparé de l'atmosphère environnante sur le convoyeur de refroidissement (16).

8. Procédé selon l'une des revendications 1 à 6, dans lequel les scories d'aluminium (41) produites dans le processus de fusion sont recueillies dans un récipient (12) pouvant être fermé, au moyen d'un couvercle (13), à l'atmosphère environnante et le récipient (12) fermé après son remplissage avec les scories d'aluminium est placé sur une station de transfert (50) formée sur le boîtier (32) du convoyeur de refroidissement (16) qui peut être fermée à l'atmosphère environnante et ne peut être ouverte que lorsque le récipient (12) est placé sur celle-ci.

9. Procédé selon la revendication 8, dans lequel dans le récipient (12) placé sur la station de transfert (50), un organe d'ouverture (53) est disposé au fond (52) du récipient (12) et un organe d'ouverture (51) disposé dans la zone de placement pour le récipient (12) sur la station de transfert (50) est ouvert et est refermé après le vidage du récipient (12) sur le convoyeur de refroidissement (16).

10. Procédé selon la revendication 7, dans lequel les organes d'ouverture (51, 53) sur la station de transfert (50) et le récipient (12) sont formés respectivement comme un tiroir plan.

11. Procédé selon l'une des revendications 1 à 8, dans lequel on utilise comme gaz inerte de l'argon pour le refroidissement des scories d'aluminium (41) sur la première partie (18) du convoyeur de refroidissement (16).
